# EUROPEAN PATENT SPECIFICATION

(11) **EP 0 484 292 B1**
(45) Date of publication and mention of the grant of the patent: **25.05.1994**
(21) Application number: 91830461.9
(22) Date of filing: 29.10.1991
(51) Int. Cl.: B60S 1/24

(54) **A windscreen wiper with a variable stroke**
Scheibenwischer mit variabler Schwenkbewegung
Essuie-glace à mouvement variable

(30) Priority: 31.10.1990 IT 6785890
(43) Date of publication of application: 06.05.1992
(73) Proprietor: INDUSTRIE MAGNETI MARELLI S.p.A., 20145 Milano (IT)
(72) Inventor: de Filippis, Pietro, c/o Industrie Magneti, I-20128 Milano (IT); Pedani, Giuseppe, I-20131 Milano (IT)
(74) Representative: Quinterno, Giuseppe

(56) References cited:
- DE-A- 3 829 939
- DE-A- 3 839 862
- FR-A- 2 340 842
- FR-A- 2 555 531

## Description

The present invention relates to a windscreen wiper for motor vehicles, including an electric motor which is connected to a wiper arm by a transmission mechanism for making the arm oscillate between two limit positions and which has adjustment means for varying the frequency of oscillation of the wiper arm by varying the speed of rotation of the motor, and control means for varying at least one of the limit positions so as to reduce the angle of oscillation of the arm.

Windscreen wipers for motor vehicles of the aforementioned type are known from DE-A-3 839 862, which discloses arrangements for reducing the travel angle of the wiper arm when the vehicle speed exceeds a given value, in order to prevent wiper blade from going beyond the wiper limit position under wind pressure.

Known windscreen wipers normally have adjustment devices which enable the driver to select the frequency of oscillation of the arm according to the visibility conditions by operating a multi-position switch in the passenger compartment. It has been found, however, that in some poor conditions (for example, in torrential rain or when water is sprayed at the vehicle by a vehicle in front) the wiper arm is till unable to ensure adequate visibility at its maximum frequency of oscillation.

This problem cannot be solved simply by an increase in the frequency of oscillation of the arm. In fact, in known windscreen wipers, an increase in the frequency of oscillation of the wiper arm would involve an increase in its angular velocity. This would increase the centrifugal forces acting on the wiper arm in proportion to the square of the increase in velocity, meaning that both the arm and the wiper blade would have to be oversized. In any case, even with an expensive, oversized wiper arm, the speed of the arm could not be increased beyond a threshold value above which hydrodynamic lift occurs, causing the wiping edge of the blade to be lifted off the surface of the windscreen. Above this limit speed the wiping effect of the blade would be almost nil.

In order to resolve these problems, the subject of the present invention is a windscreen wiper of the type specified above, characterised in that the adjustment means are arranged to increase the frequency of oscillation of the arm by the extent to which its angle of oscillation is reduced so as to keep the speed of the wiper arm substantially constant.

The present invention is based upon the fact that the windscreen wipers normally used wipe areas somewhat larger than the minimum safe area set by the homologation standards (the SAE standards). The angle through which the arm oscillates (and hence the area wiped by the blade) can therefore be reduced in conditions of poor visibility whilst the area wiped remains large enough to comply with the established safety standards, Since the mean angular velocity of the wiper arm is the product of its frequency of oscillation and the angle through which it oscillates, if the angle is reduced, it is possible to increase the frequency of oscillation of the arm by the same extent without changing its mean angular velocity.

Further characteristics and advantages of the present invention will become clear in the course of the detailed description which follows with reference to the appended drawings given purely by way of non-limiting example, in which:

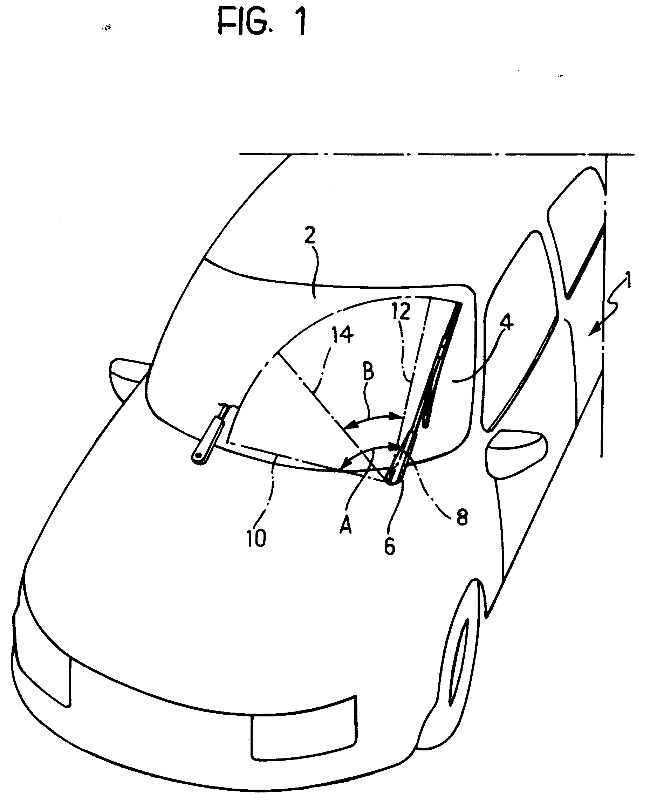

Figure 1 is a schematic view of a vehicle with a windscreen wiper according to the present invention,
Figure 2 is a schematic view showing the operation of the kinematic transmission mechanism of a known windscreen wiper,
Figures 3 and 4 are schematic views showing the kinematic transmission mechanism of a windscreen wiper according to the present invention in two different operating conditions, and
Figures 5 and 6 show a variant of the device of the invention in two different operating conditions.

With reference to the drawings, a vehicle, indicated 1, has a windscreen 2 wiped by a wiper blade 4 carried by a wiper arm 6. In the following description and in the claims, reference will be made to a single wiper arm but, naturally, the present invention can be adapted both to single-arm windscreen wipers and to windscreen wipers with two or more arms. In normal operating conditions, the wiper arm 6 oscillates between two limit positions, indicated 8 and 10. The frequency of oscillation of the wiper arm 6 can be selected by the driver by the operation of a switch in the passenger compartment which varies, by means of a conventional control unit, the speed of rotation of the electric motor which drives the wiper arm 6. The present invention provides for a further possible adjustment which the driver can use in conditions of poor visibility. This adjustment reduces the angle of oscillation of the wiper arm 6 from its original value A to a value B which is 60-70% of the original angle. At the same time as its angle of oscillation is reduced, the frequency of oscillation of the wiper arm 6 is increased by the extent to which angle of oscillation is reduced by an increase in the speed of rotation of the electric drive motor. The speed of the blade 4 relative to the windscreen 2 is thus kept substantially constant and in any case below a limit value above which hydrodynamic lift occurs, causing the blade 4 to be separated from the windscreen 2. The area of the screen 2 wiped under these conditions of poor visibility is smaller than the area normally wiped by the blade 4 but is still sufficient to comply with safety standards. The area affected by the blade 4 when the arm oscillates between the new limit positions 12 and 14 is wiped more efficiently by virtue of the greater frequency of oscillation of the arm 6.

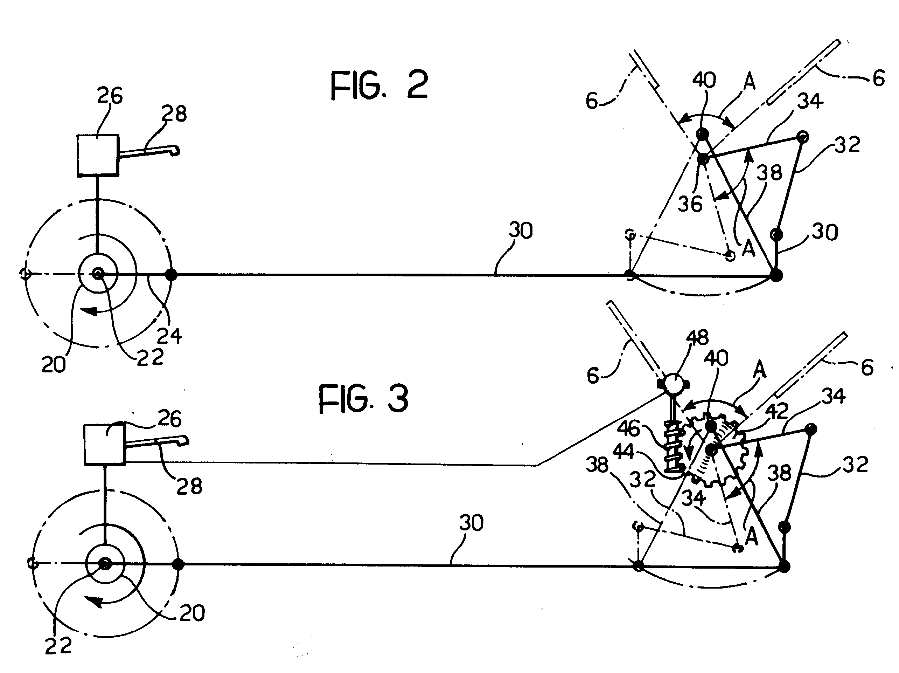

Figure 2 shows schematically a known kinematic transmission mechanism. An electric motor, indicated 20, rotates a pin 22 to which a crank 24 is articulated. The speed of rotation of the motor 20 can be varied by a conventional control unit 26 operated by a lever 28 (or a rotary switch) operable by the driver. An L-shaped connecting rod 30 articulated to the crank 24 is articulated at its end to a rod 32. One end of a first transmission member 34 is articulated to an end of the rod 32 and its other end is articulated about a fixed axis 36. The wiper arm 6 is fixed to the transmission member 34 by a pin (not shown) rotatable about the axis 36. One end of a second transmission member 38 is articulated to the angle of the connecting rod 30 and its other end is articulated about a second fixed axis 40. The kinematic mechanism described transforms the rotary motion of the motor 20 into an oscillatory motion of the wiper arm 6.

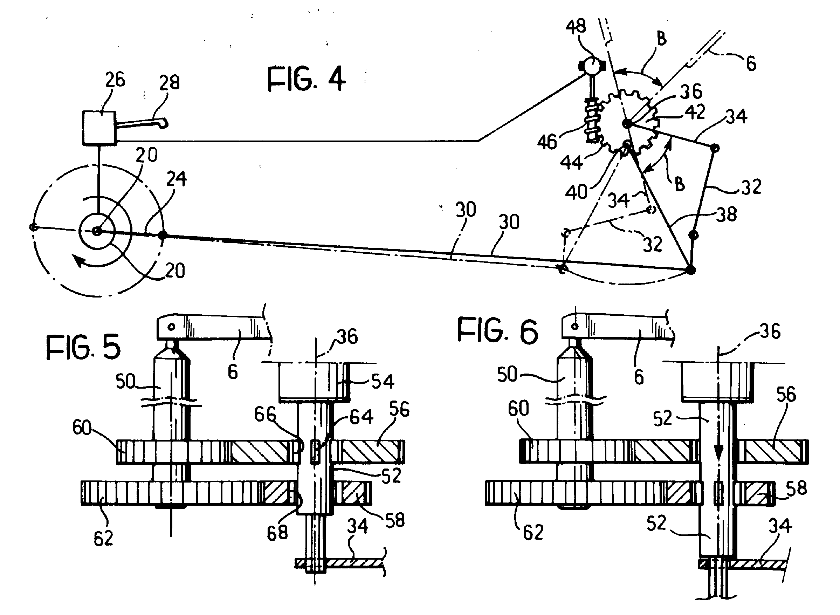

Figures 3 and 4 show a variant of the known kinematic mechanism described above which enables the angle of oscillation of the wiper arm 6 to be varied. The parts which correspond to those described above are indicated by the same reference numerals in Figures 3 and 4. In this variant, the axis 40 is carried by a ring 42 rotatable about the axis 36. The ring 42 has helical teeth 44 which mesh with a worm gear 46 carried by the shaft of an electric motor 48.

Under normal operating conditions, the axis 40 is in the position shown in Figure 3. When the driver selects the poor visibility position by means of the lever 28, the control unit 26 operates the motor 48 which rotates the ring 44 until the axis 40 is brought to the position shown in Figure 4. In this condition, the angle through which the transmission member 34 oscillates changes from the value A to the value B and the angle of oscillation of the arm 6 is thus reduced. At the same time as the motor 48 is operated, the control unit 26 increases the speed of rotation of the motor 20 by the extent to which the angle of oscillation of the arm 6 is reduced.

In the variant shown in Figures 5 and 6, the wiper arm 6 is fixed to a pin 50 which extends parallel to the fixed axis 36 about which the transmission member 34 oscillates. The member 34 is connected for rotation with a member 52 which can be made to slide along the axis 36 by an electromagnetic actuator 54. A pair of idle gears 56, 58 mounted on the member 52 are meshed permanently with respective gears 60, 62 fixed to the pin 50. The member 52 has a radial tooth 64 which can selectively engage internal teeth 66, 68 of the gears 56, 58. In the configuration shown in Figure 5, the pair of gears 56, 60, whose transmission ratio is such that the pin 50 rotates through an angle A, is active.

The operation of the electromagnetic actuator 54 (by the control unit 26) brings the member 52 to the configuration of Figure 6. In this case, the gears 58, 62 are active, their their transmission ratio being such that the pin 50 rotates through an angle B.

## Claims

1. A windscreen wiper for motor vehicles, including an electric motor (20) which is connected to a wiper arm (6) by a transmission mechanism for making the arm (6) oscillate between two limit positions (8, 10) and which has adjustment means (26) for varying the frequency of oscillation of the wiper arm (6) by varying the speed of rotation of the motor (20), and control means (48, 54) for varying at least one of the limit positions so as to reduce the angle of oscillation of the arm (6), characterised in that the adjustment means (26) are arranged to increase the frequency of oscillation of the arm (6) by the extent to which its angle of oscillation (A, B) is reduced so as to keep the speed of the wiper arm (6) substantially constant.

2. A windscreen wiper according to Claim 1, characterised in that the transmission mechanism includes at least two transmission members (34, 48) which oscillate about respective axes (36, 40) whose positions are fixed during the operation of the device, in which the wiper arm (6) is mounted on a first axis (36), in which the position of the second axis (40) relative to the first axis (36) determines the amplitude of oscillation of the arm, and in which the control means include an actuator (48) for varying the position of the second axis of oscillation (40) relative to the first (36).

3. A windscreen wiper according to Claim 2, characterised in that the second axis of oscillation (40) is carried by a ring (42) which is rotatable about the first axis (36) and in that the actuator (48) is arranged to rotate the ring (42) from a first position to at least one second position, the positions corresponding to the normal amplitude of oscillation of the arm (6) and to its reduced amplitude.

4. A windscreen wiper according to Claim 3, characterised in that the actuator (48) is an electric motor connected to a worm screw (46) meshed with helical teeth (44) on the ring (42).

5. A windscreen wiper according to Claim 1, characterised in that the transmission mechanism includes a member (52) which is rotatable with an oscillatory motion and can be connected selectively to a pin (50) carrying the wiper arm (6) by means of first and second pairs of gears (56, 60; 58, 62) with different transmission ratios, the control means including an actuator (54) for selecting the pair of gears to transmit the motion to the pin (50) of the wiper arm (6).

6. A windscreen wiper according to Claim 5, characterised in that two idle gears (56, 58) are mounted on the member (52) and meshed with respective gears (60, 62) fixed to the pin (50) of the wiper arm (6), the member (52) having a radial tooth (64) for selectively engaging the gears (56, 58) mounted on the member (52) and the actuator (54) being adapted to slide the member (52) axially between two end-of-travel positions in which the radial tooth (64) makes the first or second gear (56, 68) fast with the member (50).

## Patentansprüche

1. Ein Scheibenwischer für Kraftfahrzeuge mit einem Elektromotor (20), welcher über einen Übertragungsmechanismus mit einem Scheibenwischerarm (6) verbunden ist, um den Arm (6) zwischen zwei Endlagen (8, 10) hin- und herzubewegen, und welcher über eine Einstellvorrichtung (26) zum Variieren der Frequenz, mit der der Scheibenwischerarm (6) hin- und herbewegt wird, durch Verändern der Drehzahl des Motors (20) und über Steuervorrichtungen (48, 54) zur Veränderung von mindestens einer der Endlagen in dem Maße, daß der Winkel der Hin- und Herbewegung des Armes (6) reduziert wird, verfügt, dadurch gekennzeichnet, daß die Einstellvorrichtung (26) so angelegt ist, daß die Frequenz, mit der der Arm (6) hin- und herbewegt wird, um das Maß, um das dessen Winkel der Hin- und Herbewegung (A, B) reduziert wird, derart vergrößert wird, daß die Geschwindigkeit des Scheibenwischerarms (6) im wesentlichen konstant bleibt.

2. Ein Scheibenwischer gemäß Anspruch 1, dadurch gekennzeichnet, daß der Übertragungsmechanismus mindestens zwei Übertragungselemente (34, 48) umfaßt, die um entsprechende Achsen (36, 40) schwingen, deren Positionen während der Benutzung der Vorrichtung fest sind, bei dem der Scheibenwischerarm (6) auf einer ersten Achse (36) montiert ist, bei dem die Position der zweiten Achse (40) relativ zu der ersten Achse (36) die Amplitude der Hin- und Herbewegung des Armes bestimmt und bei dem die Steuervorrichtungen ein Stellglied (48) zur Variierung der Position der zweiten Schwingungsachse (40) relativ zu der ersten (36) umfassen.

3. Ein Scheibenwischer gemäß Anspruch 2, dadurch gekennzeichnet, daß die zweite Schwingungsachse (40) durch einen Kranz (42) getragen wird, welcher um die erste Achse (36) drehbar ist, und dadurch, daß das Stellglied (48) so angeordnet ist, daß es den Kranz (42) aus einer ersten Position in mindestens eine zweite Position dreht, wobei die Positionen der normalen Amplitude der Hin- und Herbewegung des Armes (6) und dessen reduzierter Amplitude entsprechen.

4. Ein Scheibenwischer gemäß Anspruch 3, dadurch gekennzeichnet, daß es sich bei dem Stellglied (48) um einen Elektromotor handelt, welcher mit einer Schneckenschraube (46) verbunden ist, die mit schneckenförmigen Zähnen (44) in den Kranz (42) greift.

5. Ein Scheibenwischer gemäß Anspruch 1, dadurch gekennzeichnet, daß der Übertragungsmechanismus ein Element (52) umfaßt, welches mit einer Schwingungsbewegung drehbar ist und selektiv an einen Stift (50) angeschlossen werden kann, welcher den Scheibenwischerarm (6) mittels eines ersten und eines zweiten Paars von Zahnrädern (56, 60; 58, 62) mit verschiedenen Übersetzungen trägt, wobei die Steuervorrichtungen ein Stellglied (54) zur Auswahl des Paars von Zahnrädern zur Übertragung der Bewegung auf den Stift (50) des Scheibenwischerarms (6) umfassen.

6. Ein Scheibenwischer gemäß Anspruch 5, dadurch gekennzeichnet, daß zwei leerlaufende Zahnräder (56, 58) auf dem Element (52) montiert sind und in zwei entsprechende Zahnräder (60, 62), welche an dem Stift (50) des Scheibenwischerarms (6) befestigt sind, eingreifen, wobei das Element (52) einen Stirnzahn (64) zum selektiven Eingreifen der Zahnräder (56, 58), die auf dem Element (52) montiert sind, umfaßt und das Stellglied (54) angepaßt ist, um das Element (52) axial zwischen zwei Endlagen zu verschieben, in welchen der Stirnzahn (64) das erste oder zweite Zahnrad (56, 68) mit dem Element (50) festmacht.

## Revendications

1. Essuie-glace destiné à des véhicules automobiles, comprenant un moteur électrique (20) qui est relié à un bras d'essuie-glace (6) au moyen d'un mécanisme de transmission, afin de faire osciller le bras (6) entre deux positions limites (8, 10) et qui présente des moyens de réglage (26) pour faire varier la fréquence d'oscillation du bras d'essuie-glace (6), en faisant varier la vitesse de rotation du moteur (20), et des moyens de commande (48, 54) pour faire varier au moins l'une des positions limites, de manière à réduire l'angle d'oscillation du bras (6), caractérisé en ce que les moyens de réglage (26) sont agencés de manière à augmenter la fréquence d'oscillation du bras (6) de la valeur selon laquelle son angle d'oscillation (A, B) est réduit, afin de maintenir sensiblement constante la vitesse du bras d'essuie-glace (6).

2. Essuie-glace selon la revendication 1, caractérisé en ce que le mécanisme de transmission comprend au moins deux organes de transmission (34, 48) qui oscillent autour d'axes (36, 40) respectifs, dont les positions sont fixées durant le fonctionnement du dispositif, dans lequel le bras d'essuie-glace (6) est monté sur un premier axe (36), dans lequel la position du second axe (40) par rapport au premier axe (36) détermine l'amplitude d'oscillation du bras, et dans lequel les moyens de commande comprennent un organe d'actionnement (48) pour faire varier la position du second axe d'oscillation (40) par rapport au premier (36).

3. Essuie-glace selon la revendication 2, caractérisé en ce que le second axe d'oscillation (40) est supporté par une bague (42) qui peut tourner autour du premier axe (36) et en ce que l'organe d'actionnement (48) est agencé de manière à faire tourner la bague (42) d'une première position à au moins une deuxième position, les positions correspondant à l'amplitude d'oscillation normale du bras (6) et à son amplitude réduite.

4. Essuie-glace selon la revendication 3, caractérisé en ce que l'organe d'actionnement (48) est un moteur électrique relié à une vis sans fin (46) en prise avec des dents hélicoïdales (44) situées sur la bague (42).

5. Essuie-glace selon la revendication 1, caractérisé en ce que le mécanisme de transmission comprend un organe (52) qui peut tourner avec un mouvement oscillant et peut être relié sélectivement à un pivot (50) supportant le bras d'essuie-glace (6) au moyen de premier et second couples d'engrenages (56, 60; 58, 62) selon différents rapports de transmission, les moyens de commande comprenant un organe d'actionnement (54) servant à sélectionner le couple d'engrenages afin de transmettre le mouvement du pivot (50) du bras d'essuie-glace (6).

6. Essuie-glace selon la revendication 5, caractérisé en ce que deux engrenages fous (56, 58) sont montés sur l'organe (52) et en prise avec des engrenages (60, 62) respectifs fixés au pivot (50) du bras d'essuie-glace (6), l'organe (52) présentant une dent radiale (64) servant à venir sélectivement en contact avec les engrenages (56, 58) montés sur l'organe (52) et l'organe d'actionnement (54) étant adapté à faire coulisser axialement l'organe (52) entre deux positions de fin de course dans lesquelles la dent radiale (64) solidarise le premier ou second engrenage (56, 68) à l'organe (50).
